# FASCICULE DE BREVET EUROPEEN

(11) **EP 3 486 971 B1**
(45) Date de publication et mention de la délivrance du brevet: **20.05.2020**
(21) Numéro de dépôt: 18205500.4
(22) Date de dépôt: 09.11.2018
(51) Int. Cl.: H01M 2/26, H01M 4/133, H01M 4/587, H01M 4/66, H01M 4/80, H01M 10/0525

(54) **COLLECTEUR DE COURANT POREUX AVEC LANGUETTE DE CONNEXION ÉLECTRIQUE DENSE POUR SYSTÈME ÉLECTROCHIMIQUE ÉTANCHE**
PORÖSER STROMKOLLEKTOR MIT DICHTER ELEKTRISCHER ANSCHLUSSZUNGE FÜR DICHTES ELEKTROCHEMISCHES SYSTEM
POROUS CURRENT COLLECTOR WITH DENSE ELECTRICAL CONNECTION TAB FOR SEALED ELECTROCHEMICAL SYSTEM

(30) Priorité: 21.11.2017 FR 1761019
(43) Date de publication de la demande: 22.05.2019
(73) Titulaire: Commissariat à l'Energie Atomique et aux Energies Alternatives, 75015 Paris (FR)
(72) Inventeur: SALOMON, Jérémie, 38054 GRENOBLE Cedex 09 (FR); MOURZAGH, Djamel, 38054 GRENOBLE Cedex 09 (FR); SOLAN, Sébastien, 38054 GRENOBLE Cedex 09 (FR)
(74) Mandataire: Nony

(56) Documents cités:
- WO-A1-2017/055705
- WO-A1-2017/092901
- WO-A2-2009/148971
- DE-A1-102012 000 819
- US-A1- 2017 214 031
- US-B2- 8 465 871

## Description

### Domaine technique

La présente invention concerne le domaine des systèmes électrochimiques comprenant un emballage pour garantir l'étanchéité du cœur vis-à-vis de l'extérieur.

Plus particulièrement, il peut s'agir de générateurs électrochimiques métal-ion, qui fonctionnent selon le principe d'insertion ou de désinsertion, ou autrement dit intercalation-désintercalation, d'ions métal dans au moins une électrode.

Elle concerne plus particulièrement un accumulateur électrochimique au lithium ou lithium-ion.

L'invention a trait en particulier à la réalisation d'un collecteur de courant poreux, en particulier à base de fibres de carbone, avec une languette de sortie métallique pour accumulateur électrochimique métal-ion.

Bien que décrite en référence à un accumulateur Lithium-ion, l'invention s'applique à tout accumulateur électrochimique métal-ion, c'est-à-dire également Sodium-ion, Magnésium-ion, Aluminium-ion...

### Etat de la technique

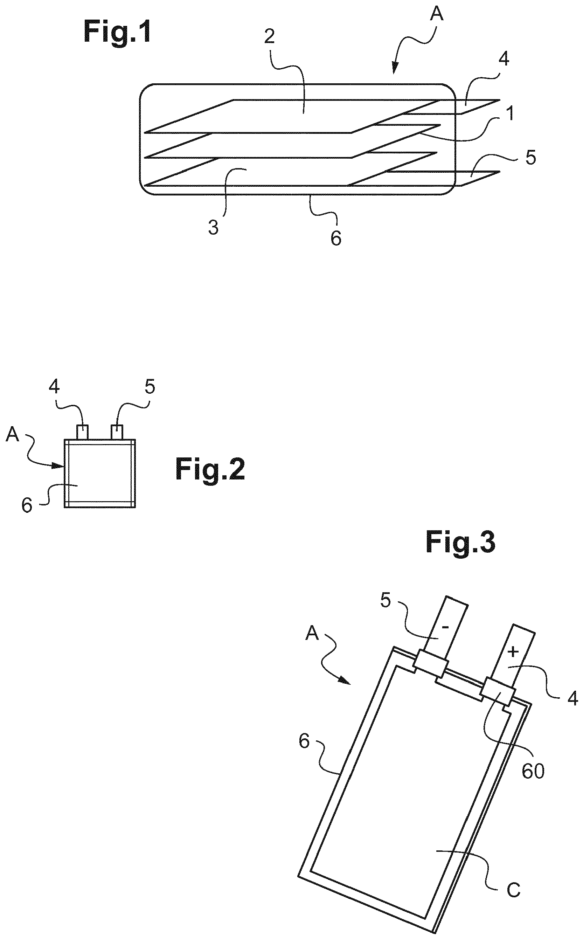

Telle qu'illustrée schématiquement en figures 1 et 2, une batterie ou accumulateur lithium-ion comporte usuellement au moins une cellule électrochimique C constituée d'un constituant d'électrolyte 1, imprégné dans un séparateur permettant d'isoler électriquement les électrodes, entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique et la rendre étanche à l'air extérieur et à l'électrolyte à l'intérieur de la cellule, tout en étant traversé par une partie des collecteurs de courant 4, 5.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique, avec enroulement autour d'un axe cylindrique telle que divulguée dans la demande de brevet US 2006/0121348,
- une géométrie prismatique, avec enroulement autour d'un axe parallélépipédique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode est constituée de matériaux d'insertion du cation Lithium qui sont en général composite, comme le phosphate de fer lithié LiFePO₄, l'oxyde de cobalt lithié LiCoO₂ l'oxyde de manganèse lithié, éventuellement substitué, LiMn₂O₄ ou d'oxyde de métaux de transition, comme les matériaux lamellaires par exemple, un matériau à base de LiNiₓMn_{y}Co_{z}O₂ avec x+y+z = 1, tel que LiNi_{0.33}Mn_{0.33}Co_{0.33}O₂, ou un matériau à base de type oxyde de nickel cobalt aluminium LiNiₓCo_{y}Al_{z}O₂ avec x+y+z = 1, tel que LiNi_{0.8}Co_{0.15}Al_{0.05}O₂.

L'électrode négative ou anode est très souvent constituée de carbone, graphite ou de Li₄TiO₅O₁₂ (matériau titanate), éventuellement peut-être à base de silicium ou à base de lithium, ou à base d'étain et de leurs alliages ou de composite formé à base de silicium. Cette électrode négative tout comme l'électrode positive peut également contenir des additifs conducteurs électroniques ainsi que des additifs polymères qui lui confèrent des propriétés mécaniques et des performances électrochimiques appropriées à l'application batterie lithium-ion ou à son procédé de mise en œuvre.

L'anode et la cathode en matériau d'insertion au Lithium peuvent être déposées en continu selon une technique usuelle sous la forme d'une couche active sur une feuille ou feuillard métallique constituant un collecteur de courant.

Le collecteur de courant connecté à l'électrode positive est en général en aluminium.

Le collecteur de courant connecté à l'électrode négative est en général en cuivre, en nickel, en cuivre nickelé ou en aluminium.

Plus précisément, l'aluminium est utilisé pour les collecteurs de courant communs à des électrodes positive et négative de titanate Li₄Ti₅O₁₂. Le cuivre est plutôt pour les électrodes négatives de graphite (Cgr), de silicium (Si) ou de composite silicium (Si-C).

Traditionnellement, une batterie ou accumulateur Li-ion utilise un couple de matériaux à l'anode et à la cathode lui permettant de fonctionner à un niveau de tension, typiquement entre 1,5 et 4,2 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages rigides (boitiers) sont usuellement fabriqués à partir d'un matériau métallique, typiquement un alliage d'aluminium ou en acier inoxydable ou d'un polymère rigide comme par exemple l'acrylonitrile butadiène styrène (ABS).

Les emballages souples sont usuellement fabriqués à partir d'un matériau composite multicouche constitué d'une feuille d'aluminium recouverte par un ou plusieurs film(s) en polymère laminés par collage. Dans la plupart de ces emballages souples, le polymère recouvrant l'aluminium est choisi parmi le polyéthylène (PE), le propylène, le polyamide (PA) ou peut être sous la forme d'une couche adhésive constituée de polyester-polyuréthane. La société Showa Denko commercialise ce type de matériaux composite pour une utilisation en tant qu'emballage de batteries sous les références NADR-0N25/AL40/CPP40 ou N ° ADR-0N25/AL40/CPP80.

La figure 3 illustre ce type d'emballage souple 6 qui est agencé pour isoler et étanchéifier la cellule électrochimique C tout en étant traversé par une partie 40, 50 de deux lamelles ou languettes 4, 5, communément appelée en anglais « tab », formant les pôles et qui s'étendent dans le plan de la cellule électrochimique.

L'avantage principal des emballages souples est leur légèreté. Les accumulateurs Li-ion avec les plus grandes densités d'énergie comportent de ce fait un emballage souple. L'inconvénient majeur de ces emballages souples est que leur étanchéité peut se détériorer fortement au cours du temps du fait de la non-tenue chimique du scellage réalisé.

Un accumulateur souple, communément appelé en anglais « Thin Film Battery», est le plus souvent constitué d'une seule cellule électrochimique.

L'épaisseur totale de l'accumulateur avec son emballage souple est généralement inférieure à 0,6 mm, ce qui permet de le plier selon un rayon de courbure compris entre 20 et 30 mm, qui est fonction des dimensions et de la chimie des matériaux d'électrodes, et ce sans altérer les performances lors du fonctionnement de l'accumulateur.

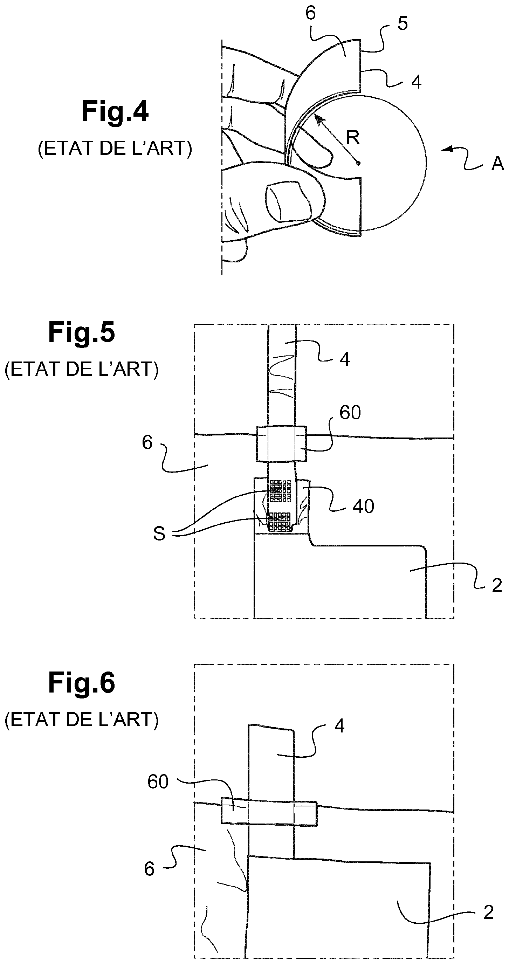

On a représenté en figure 4, un tel accumulateur A dans une configuration pliée, le rayon de courbure R étant symbolisé.

Pour obtenir un fonctionnement optimal des accumulateurs Li-ion, la ou les cellules électrochimiques doi(ven)t être étanche(s) vis-à-vis de l'humidité de l'air. Pour garantir cette étanchéité au niveau des connections externes de l'accumulateur, les fabricants utilisent des rivets ou procèdent par soudure laser dans le cas d'un emballage rigide.

Dans le cas d'un emballage souple, on met en œuvre un ruban d'étanchéité. Il est généralement à base d'un polymère thermo-fusible autour d'une languette métallique de sortie.

La languette peut être vendue en tant que telle et est dimensionnée en fonction du passage du courant qui est lié à la capacité totale de la batterie. Pour des cellules de capacité inférieure à 2 Ah, la languette a une largeur de 5 mm et une épaisseur de 0,5 mm. Le ruban d'étanchéité est laminé collé sur la languette et généralement a une longueur de 10mm, une largeur de 5mm et une épaisseur de 0,3mm. Un exemple d'une telle languette en aluminium 4 est montré en figure 5.

Ainsi, comme montré en figure 3, des renforts en polymère 60 à base de polyoléfine sont prévus pour améliorer le scellage à chaud de l'emballage 6 autour des languettes 4, 5, et ainsi garantir l'étanchéité de l'accumulateur de l'extérieur vers l'intérieur (eau, oxygène, azote...) et vice et versa (électrolyte, gaz dus aux réactions électrochimiques...).

Généralement, les languettes rapportées 4, 5 sont fixées sur les substrats formant les collecteurs de courant des électrodes par soudures ultra-sons. Les languettes sont en général en nickel lorsqu'elles sont fixées sur un collecteur en cuivre et en aluminium lorsqu'elles sont fixées sur un collecteur en aluminium.

Un exemple de languette en aluminium 4 fixée sur un collecteur en aluminium est montré en figure 5. Un ruban polymère thermo-fusible 60 est laminé-collé sur chaque face principale de la languette 4.

Les languettes avec ruban étant initialement fourni sous forme d'une bande continue enroulée, la longueur est découpée fonction du besoin pour la languette métallique 4. Dans le cas où l'accumulateur comprend une seule cellule électrochimique, la connexion externe peut aussi être assurée directement par les substrats collecteurs de courant des électrodes qui sont découpées selon une forme de languette.

Dans ce cas, un ruban d'étanchéité qui est vendu séparément de la languette est ajouté sur chaque face principale du substrat collecteur de courant, comme représenté sur la figure 6. Ce ruban polymère thermo-fusible 60 généralement a une largeur de 5 mm et une épaisseur de 0,1 mm. Le ruban étant initialement fourni sous forme d'une bande continue enroulée, la longueur est découpée fonction du besoin pour le substrat collecteur de courant.

Comme visible sur les figures 5 et 6, la languette métallique 4, typiquement en aluminium est soit soudée au collecteur de courant 40 par des points de soudure S, soit partie intégrante du collecteur de courant 40.

Dans la littérature, on trouve différentes tentatives pour substituer les substrats métalliques des collecteurs de courant par des substrats en carbone ainsi que des solutions de liaison de ces substrats avec des languettes métalliques de sortie.

On peut ainsi citer le brevet US8465871 B2 qui divulgue ainsi la mise en œuvre d'un substrat en feutre de carbone et une méthode pour relier une languette métallique de sortie au substrat par rivetage.

Le brevet EP2619832B1 au nom de la déposante divulgue un collecteur de courant d'électrode pour batterie lithium, qui est poreux et est réalisé en fibres de carbone tissées ou non tissées.

La demande de brevet WO2017/055705 au nom de la déposante décrit également un procédé de fixation entre un collecteur métallique et un feutre de carbone qui consiste à imprégner le feutre de carbone d'un mélange d'une poudre métallique et de réaliser une soudure entre le collecteur métallique et le feutre de carbone imprégné.

Les solutions proposées ne sont pas complètement satisfaisantes. En effet, d'une part, l'étanchéité obtenue n'est pas garantie et d'autre part, ces solutions ne permettent pas d'obtenir réellement un assemblage d'accumulateurs suffisamment flexible pour permettre à une batterie résultant de cet assemblage de se conformer à n'importe quel objet.

Il existe donc un besoin d'améliorer les électrodes d'accumulateurs au lithium, et plus généralement métal-ion, qui sont réalisées à partir de substrats collecteurs de courant à base de carbone, notamment afin d'augmenter l'étanchéité des accumulateurs tout en leur conférant des caractéristiques de souplesse en vue d'assurer une conformabilité à une batterie qui résulte d'un assemblage de plusieurs de ces accumulateurs.

Le but général de l'invention est de répondre au moins en partie à ce besoin.

### Exposé de l'invention

Pour ce faire, l'invention a pour objet un système électrochimique étanche, comprenant:
- un emballage ;
- un substrat électriquement conducteur et poreux, formant un collecteur de courant et supportant, sur au moins une de ses faces principales, au moins un motif continu de matériau actif d'une électrode;
- au moins une languette électriquement conductrice et dense, liée au substrat selon au moins une jonction électriquement conductrice obtenue par couture au moyen d'au moins un fil électriquement conducteur, la languette supportant sur chacune de ses faces principales au moins un ruban d'étanchéité scellé à l'emballage pour garantir la fermeture étanche de celui-ci.

Par « « poreux », on entend ici et dans le cadre de l'invention, non étanche à l'air ou à un électrolyte notamment par la tranche du substrat.

A contrario, par « dense », on entend ici et dans le cadre de l'invention, étanche à l'air ou à un électrolyte du système électrochimique. La densité massique de la languette est alors égale à la densité théorique du matériau massif la constituant.

Par « électriquement conducteur/conductrice », on entend ici et dans le cadre de l'invention, une conductivité supérieure ou égale à 1S/cm.

L'emballage d'un système selon l'invention peut être rigide ou souple.

De préférence, la languette est métallique, de préférence encore en aluminium, en cuivre ou en nickel. Elle a une épaisseur permettant cette couture de préférence entre 10µm et 200µm. Mais on peut aussi envisager tout autre matériau dense et suffisamment conducteur, comme certaines céramiques frittées

De préférence, le fil électriquement conducteur est en cuivre ou en aluminium, ou en carbone ou est métallisé, comme par exemple du nylon métallisé. Pour garantir la tenue mécanique de l'ensemble ainsi que passage du courant, un nombre de points de couture de 16 points/cm² est préconisé de préférence.

L'homme du métier dimensionnera aussi les différentes sections de passage du courant pour garantir un maximum de 5A/mm², de manière à éviter les échauffements.

Avantageusement, le diamètre du fil est compris entre 0,3 et 2 mm pour un fil de carbone, entre 0,1 et 0,5 mm pour un fil de cuivre et entre 0,8 et 2 mm pour un fil d'aluminium.

La largeur d'un ruban d'étanchéité est de préférence comprise entre 0,5 et 1 cm.

L'épaisseur d'un ruban d'étanchéité est de préférence comprise entre 0,05 et 0,2 mm.

De préférence encore, le ruban d'étanchéité est à base de polymère thermo fusible. Mais on peut aussi envisager tout autre matériau d'étanchéité, tel qu'une colle, du verre, à la condition que compatible avec l'électrolyte du système électrochimique.

Selon un mode de réalisation avantageux, le substrat poreux est un substrat à base de fibres de carbone. Il peut s'agir avantageusement d'un substrat non tissé. On peut aussi envisager en tant que substrat poreux, une mousse métallique, telle qu'une mousse en nickel, cuivre...

Selon ce mode de réalisation avantageux, le substrat à base de fibres de carbone est un non tissé réalisé à partir de fibres de carbone de diamètre préférentiellement compris entre 2 et 20 µm, préférentiellement selon un facteur de forme entre diamètre et longueur supérieur à 10, et de préférence une densité comprise entre 1,8 et 2,2. Le substrat en non tissé de carbone a de préférence une épaisseur comprise entre 100 et 250 µm, de préférence une masse volumique comprise entre 30 et 1100 mg/cm³, de préférence une porosité comprise entre 50 et 98%.

Selon ce mode de réalisation avantageux, les inventeurs ont choisi d'utiliser un collecteur de courant poreux à base de fibres de carbone, qui a les nombreux avantages suivants :
- une flexibilité accrue par rapport aux collecteurs métalliques conventionnels dans les batteries Li-ion,
- une flexibilité similaire pour les électrodes positive et négative puisqu'on peut utiliser le même substrat à base de fibres de carbone, i.e. avec la même épaisseur et les mêmes caractéristiques mécaniques,
- une résistance à la déchirure accrue par rapport à un collecteur de courant métallique classique,
- une augmentation de la densité d'énergie massique par rapport à un collecteur de courant métallique classique, la densité du carbone étant plus faible que celle du cuivre ou de l'aluminium,
- une très bonne compatibilité électrochimique du carbone avec la plupart des matériaux d'insertion d'électrodes,

En revanche, le substrat à base de fibres de carbone étant poreux, en conservant des connexions externes également en substrat à base de fibres de carbone sous la forme de bande/languette nue émergeant du collecteur de courant, les inventeurs ont pu constater que l'étanchéité d'un accumulateur Li-ion n'était pas garantie.

Aussi, pour améliorer cela, les inventeurs ont pensé à utiliser des connexions externes métalliques sous la forme de languettes conductrices, denses qui sont fixées au substrat de carbone par couture, pour garantir la souplesse et en les dotant d'un ruban d'étanchéité à base de polymère afin de garantir l'étanchéité de la fermeture de l'emballage sur ces languettes denses et non plus sur des languettes poreuses à base de fibres de carbone.

Cela étant, les liaisons entre languettes métalliques et substrats en carbone proposées selon l'état de l'art, telles que décrites dans la demande de brevet WO2017/055705 et brevets US8465871B2, EP2619832B1 présentaient des lacunes en termes de résistance mécanique, conduction électrique et de flexibilité aux jonctions.

Les inventeurs ont alors pensé judicieusement à solidariser les connexions externes métalliques avec le substrat collecteur à base de fibres de carbone par couture en utilisant un fil de carbone et/ou un fil métallique, de préférence en Cu, Al....

En particulier, la couture permet d'une part d'avoir un bon contact électrique pour la conduction du courant entre le collecteur à base de fibres de carbone et une connexion externe métallique et d'autre part renforcer les propriétés mécaniques au niveau de cette connexion externe.

En ce qui concerne la fabrication proprement dite de l'électrode, on peut procéder comme suit.

La préparation de l'encre (matériau d'insertion actif) d'électrode est réalisée par le mélange des constituants à savoir le matériau actif, le liant polymère et le conducteur électronique. Le liant polymère, du PVdF ou un polymère soluble dans l'eau, a pour fonction d'apporter les propriétés mécaniques des électrodes tout en assurant un bon contact entre l'électrolyte et les grains du matériau. Le conducteur électronique, souvent du noir de carbone, améliore quant à lui la conductivité électronique des électrodes.

L'encre de l'électrode est ensuite déposée sur le collecteur de courant en fibre de carbone par procédé d'enduction qui consiste à couler l'encre sur le collecteur, formant ainsi une bande d'électrode en continue.

Il existe aussi d'autres techniques de dépôt comme l'impression, la pulvérisation, la dispense ou autre qui consiste à déposer l'encre sous forme de motifs sur le collecteur. Ainsi sont formés des motifs continus d'électrode au lieu d'une bande continue.

Les motifs continus d'électrode sont de préférence réalisés par technique d'impression à partir de l'encre préparée, de préférence encore par sérigraphie sur les substrats collecteurs de courant en non tissé de carbone. D'autres techniques d'impression peuvent être employées telles que la flexographie, l'héliogravure, le jet d'encre, l'impression par jet d'aérosol... Un avantage important des techniques d'impression est de pouvoir fabriquer des motifs de section variées (carrée, rectangulaire, ronde ou plus complexe) et donc permet d'acquérir une certaine liberté sur le design de l'accumulateur selon l'invention.

Parmi les techniques d'impression, la sérigraphie présente l'avantage de pouvoir déposer une plus grande quantité d'encre en un seul passage, ce qui permet d'obtenir de forts grammages et donc des capacités élevées. De même les cadences de production sont élevées, comparativement à l'enduction qui est le procédé conventionnel utilisé chez les industriels de la batterie, typiquement une vitesse d'impression de 20 à 25 m/s pour la sérigraphie à comparer à une vitesse 10 à 15 m/s pour l'enduction.

Une fois le dépôt du motif continu d'électrode réalisé, on procède à son séchage. Pour ce faire, le solvant est évaporé par passage de l'électrode dans un four en continue ou en statique dans une étuve ventilée.

Puis, les électrodes sont ensuite calandrées puis découpées selon le motif visé dans l'application.

Selon un mode de réalisation avantageux, le système comprend au moins deux languettes assemblées au substrat poreux, au moins une des deux languettes étant destinée à servir de liaison électrique avec un autre système électrochimique auquel le système intégrant l'électrode est relié.

L'invention a également pour objet un accumulateur électrochimique (A) métal-ion constitué à partir d'un système électrochimique étanche décrit précédemment, comprenant un empilement des éléments suivants:
- au moins une électrode négative;
- au moins une électrode positive;
- au moins un film de séparateur isolant électriquement intégrant un électrolyte, agencé en contact avec le motif d'électrode négative et le motif d'électrode positive;
- un emballage agencé pour contenir les électrodes négative et positive, et le film de séparateur, avec étanchéité tout en étant traversé par un premier et un deuxième pôles de l'accumulateur constitués chacun par la languette conductrice cousue au substrat poreux de l'électrode négative et de l'électrode positive, les rubans d'étanchéité des électrodes négative et positive étant scellés thermiquement à l'emballage.

L'accumulateur peut constituer un accumulateur Li-ion, les motifs d'électrode étant en matériau d'insertion au Lithium.

En ce qui concerne la réalisation de la connexion externe, pour chaque électrode négative ou positive, on réalise la fixation d'une languette métallique destinée à former la connexion externe ou pôle d'un accumulateur. La fixation a lieu par couture au moyen d'un fil en carbone et/ou d'un fil métallique et/ou d'un fil uniquement métallisé.

Comme précisé, afin de garantir l'étanchéité de l'accumulateur, quelle que soit la forme retenue pour les pôles, un ruban sous la forme d'une couche polymère thermo-fusible choisie de préférence parmi un polyéthylène (PE) ou un polypropylène (PP), est ajoutée entre l'emballage et les languettes autour de celles-ci.

L'emballage d'un accumulateur selon l'invention est de préférence constitué d'un sachet souple unique. Il peut être fabriqué à partir d'un matériau composite multicouche constitué d'une feuille d'aluminium recouverte par un ou plusieurs film(s) en polymère laminés par collage. Le polymère recouvrant l'aluminium peut être choisi parmi le polyéthylène (PE), le propylène, le polyamide (PA) ou peut être sous la forme d'une couche adhésive constituée de polyester-polyuréthane. La société Showa Denko commercialise ce type de matériaux composite pour une utilisation en tant qu'emballage de batteries sous les références NADR-0N25/AL40/CPP40 ou N ° ADR-0N25/AL40/CPP80. Ainsi, le sachet souple conforme à l'invention est avantageusement à base d'un film multicouches aluminisé, étanche à l'air. Afin de procéder au scellement du sachet souple par scellage thermique, on peut tout d'abord sceller thermiquement trois côtés du sachet tout en laissant ouvert le quatrième côté pour l'activation de l'accumulateur par remplissage de l'électrolyte puis, une fois ce remplissage effectué, on scelle thermiquement le quatrième côté, les languettes métalliques traversant le scellement. On comprend alors la problématique de l'étanchéité de l'emballage alors que des connexions électriques à base de fibres de carbone doivent sortir de cet emballage.

L'accumulateur selon l'invention peut être un accumulateur Li-ion, les motifs d'électrode étant en matériau d'insertion du lithium.

Par « électrode en matériau d'insertion au Lithium », on entend ici et dans le cadre de l'invention, un motif d'électrode comportant au moins un matériau d'insertion au lithium et au moins un liant en polymère. Eventuellement, le motif d'électrode peut comprendre en plus un conducteur électronique, par exemple des nanofibress de carbone, des nanotubes fibres de carbone ou du noir de carbone.

Par « matériau d'insertion au lithium », en particulier pour les motifs d'électrode positive, on entend ici et dans le cadre de l'invention, un matériau choisi parmi les oxydes lithiés comprenant du manganèse de structure spinelle, les oxydes lithiés de structure lamellaire et les mélanges de ceux-ci, les oxydes lithiés à charpentes polyanioniques de formule LiM_{y}(XO_{z})ₙ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des entiers positifs.

Par « matériau d'insertion au lithium », en particulier pour les motifs d'électrode négative, on entend également un matériau choisi parmi: oxyde de titane lithié ou non, par exemple Li₄Ti₅O₁₂ ou TiO₂, graphite, silicium, ou composite de silicium. Plus particulièrement, le matériau des motifs d'électrode négative peut être choisi parmi les matériaux carbonés, les oxydes de titane non lithiès et leurs dérivés et les oxydes de titane lithiés tels que Li₄Ti₅O₁₂ et leurs dérivés et un mélange de ceux-ci.

Par « dérivé lithié », on entend ici et dans le cadre de l'invention, des composés de formule Li₍₄₋ₓ₁₎Mₓ₁Ti₅O₁₂ et Li₄Ti_{(5-y1)}N_{y1}O₁₂, où x1 et y1 sont respectivement compris entre 0 et 0,2 et M et N sont respectivement des éléments chimiques choisis parmi Na, K, Mg, Nb, Al, Ni, Co, Zr, Cr, Mn, Fe, Cu, Zn, Si et Mo.

Par « dérivé non lithié », on entend ici et dans le cadre de l'invention, Ti_{(5-y1)}N_{y1}O₁₂, avec y1 compris entre 0 et 0,2 et N est un élément chimique choisi parmi Na, K, Mg, Nb, Al, Ni, Co, Zr, Cr, Mn, Fe, Cu, Zn, Si et Mo.

De préférence, les anodes sont en graphite et les cathodes en LiNi_{0.8}Co_{0.15}Al_{0.05}O₂ (NCA).

Par « séparateur », on entend ici et dans le cadre de l'invention, un isolant électrique, conducteur ionique formé par au moins un matériau polymère. Le séparateur est de préférence un film microporeux polymère monocouche ou multicouche à base de polyoléfine PP ou/et PE. Chaque film de séparateur est découpé selon le motif souhaité par un procédé mécanique ou par laser.

Le séparateur peut être mis en œuvre directement sur les motifs d'électrode (positive ou négative) par impression, de préférence sérigraphie, à partir d'une solution polymère.

Selon cette variante, le séparateur peut être choisi parmi les polymères suivants :
- le polyfluorure de vinylidène (PVdF) ou dérivés, le polyacétate de vinyle (PVA), le polyméthacrylate de méthyle (PMMA), le polyoxyéthylène (POE) ou dérivés, le polyéthylène téréphtalate (PET), les polyacryliques ou dérivés, les polyoléfines tels le polypropylène, le polyéthylène, la cellulose ;
- les copolymères de type PVdF-HFP (hexafluoropropylène), PVdF-POE... ;
- les ionomères conducteurs de cations ou polymères cristallins conducteurs de cations ;
- les polymères sensibles thermiquement ou photosensibles qui réticulent sous l'action de la chaleur ou d'un rayonnement UV,
- les monomères polymérisables sous UV ou par voie thermique, porteurs ou non d'une charge ionique à base d'un sel de lithium, comme par exemple les PolyHIPE.

Le polymère est mis en solution dans un solvant, ou dans un mélange solvant / non-solvant dans le cas d'un procédé d'inversion de phase.

La solution de polymère est déposée sur les motifs d'électrode sous forme d'une fine couche puis le solvant est évaporé par passage de l'électrode dans un four en continue ou en statique. Selon le polymère et le procédé de mise en œuvre utilisé, la fine couche du composant électrolytique peut être poreuse, dense ou gélifiée en présence de l'électrolyte. L'épaisseur de la couche polymère est de préférence comprise entre 5 et 40 µm.

D'autres séparateurs peuvent être envisagés comme des composites constitués d'une couche polymère de très faible épaisseur, de l'ordre de 15 µm. Le polymère utilisé peut être le PET ou polyéthylène téréphtalate. Cette feuille très fine de polymère peut être ensuite recouverte de grains de céramiques en alumine (Al₂O₃) et de silice (SiO₂). On peut citer ici le séparateur commercialisé sous la dénomination SEPARION par la société EVONIK.

On peut aussi envisager des séparateurs à base de polymères renforcés pas des fibres de verre pour des caractéristiques mécaniques. Ces séparateurs sont des non tissés car les fibres de verre sont uniquement mélangées entre elles de manière aléatoire.

Enfin, on peut envisager des séparateurs céramiques comportant notamment de l'alumine, qui a comme avantage d'avoir un effet retardateur sur l'emballement thermique.

L'électrolyte selon l'invention, peut être un liquide formé par un mélange de carbonate et au moins un sel de lithium. Par « sel de Lithium », on entend de préférence, un sel choisi parmi LiPF₆, LiClO₄, LiBF₄ et LiAsF₆.

Alternativement, l'électrolyte peut comprendre un ou plusieurs liquide ionique, à base d'ions lithium, à savoir un sel constitué de cations lithium, complexés avec des anions inorganiques ou organiques, qui a pour propriété d'être à l'état liquide à température ambiante. Un liquide ionique, selon la nature de l'anion, peut être hydrophile ou hydrophobe. A titre d'exemples de liquides ioniques, on peut citer des liquides ioniques à base d'anions hydrophobes comme le trifluorométhanesulfonate (CF₃SO₃), bis (trifluorométhanesulfonate imide [(CF₃SO₂)₂N] et tris(trifluorométhanesulfonate) méthide [(CF₃SO₂)₃C].

De préférence, la surface de chaque motif d'électrode négative est supérieure à la surface de chaque motif d'électrode positive. On s'assure ainsi que tous les ions métal du matériau d'insertion positif, tels que les ions Li⁺ dans un accumulateur au lithium, puissent venir migrer vers l'électrode négative et ainsi s'intercaler dans la structure. Outre l'alignement des motifs d'électrode positive avec ceux de l'électrode négative, on peut également augmenter la surface des motifs d'électrode négative comparativement à ceux d'électrode positive. Cela peut correspondre à une bande de matériau actif, rajoutée sur chaque côté de chaque motif d'électrode négative. Une bande rajoutée peut typiquement avoir une largeur de 1mm.

L'invention a également pour objet une batterie comprenant une pluralité d'accumulateurs comme ci-dessus, deux accumulateurs adjacents étant reliés entre eux électriquement par au moins une bande de liaison électrique réalisée en substrat conducteur poreux, dont une extrémité est liée à une languette dense d'une électrode négative ou positive d'un des deux accumulateurs et l'autre extrémité est liée à une languette dense d'une électrode respectivement négative ou positive de l'autre des deux accumulateurs, la liaison entre la bande et chacune des languettes étant réalisée selon au moins une jonction électriquement conductrice obtenue par couture au moyen d'au moins un fil métallique et/ou en carbone.

Selon une variante avantageuse, deux accumulateurs adjacents sont reliés entre eux en parallèle électrique par deux bandes de liaison électrique dont une relie entre elles les électrodes positives des deux accumulateurs et l'autre relie entre elles les électrodes négatives des deux accumulateurs.

Alternativement, deux accumulateurs adjacents sont reliés entre eux en série électrique par une seule bande de liaison électrique.

La batterie peut comprendre avantageusement au moins une bande de liaison mécanique en substrat conducteur poreux, dont chacune des extrémités est liée à une languette dense de liaison mécanique qui n'est pas liée à une électrode négative ou positive des accumulateurs, la liaison entre la bande de liaison mécanique et chacune des languettes de liaison mécanique étant réalisée selon au moins une jonction obtenue par couture au moyen d'au moins un fil.

L'invention a enfin pour objet un procédé de réalisation d'un système électrochimique étanche comprenant les étapes suivantes :
a/ obtention d'un motif continu de matériau actif d'électrode sur un substrat électriquement conducteur et poreux formant un collecteur de courant ;
b/ réalisation d'au moins une jonction électriquement conductrice entre au moins une languette électriquement conductrice et dense et le substrat, par couture au moyen d'au moins un fil métallique et/ou en carbone,
c/ réalisation sur chacune des faces principales de la languette, d'au moins un ruban d'étanchéité destiné à la fermeture étanche de l'emballage,
d/ scellement entre ruban d'étanchéité et emballage.

Les avantages de l'architecture d'un accumulateur ou batterie selon l'invention comparativement aux architectures à électrodes avec substrat collecteur de courant en carbone selon l'état de l'art sont nombreux parmi lesquels on peut citer :
- une meilleure étanchéité car la fermeture de l'emballage souple est réalisée sur un matériau dense des électrodes de l'accumulateur, à savoir la mise en œuvre de jonctions carbone-métal contenant un ruban d'étanchéité,
- une meilleure flexibilité entre plusieurs accumulateurs selon l'invention reliés entre eux grâce aux jonctions souples, ce qui permet à la batterie qui en résulte de se conformer à n'importe quel objet d'une application visée,
- une adaptabilité à souhait de la jonction métal-carbone, en particulier par variation du diamètre du fil et/ou du motif de la couture,
- pas ou peu de perte en résistance de contact électrique au niveau de la jonction métal-carbone par rapport au collecteur de courant en carbone,
- la possibilité d'une très bonne répartition des points de couture sur toute la surface de languette métallique, afin d'augmenter le contact électrique,
- l'absence de compromis à trouver entre résistance mécanique et surface de contact car pas de trous créés comme pour le rivetage selon l'état de l'art.

Les applications visées pour l'accumulateur selon l'invention sont nombreuses.

L'utilisation générale de l'accumulateur est pour alimenter électriquement tout dispositif électronique apte à se déformer afin d'être conformé avec un emplacement à contrainte de formes et/ou d'espace.

Il peut s'agir de capteurs ou antennes de type RFID (de l'anglais « *Radio Frequency Identification* ») destinés à être implantés logés dans l'habitacle d'un véhicule automobile, ou dans le moindre recoin disponible du véhicule, pour la communication d'informations.

Il peut s'agir également d'appareils portables de type téléphones portables, de formes incurvées ou autres dans lesquels il apparaît impératif que l'accumulateur épouse la forme de l'appareil...

Un accumulateur selon l'invention vise également le domaine de l'électronique flexible avec des applications telles que les capteurs pour vêtements intelligents, les écrans de type flexible, les papiers électroniques, etc...où l'objet final est soumis à des contraintes de déformations répétées.

### Description détaillée

D'autres avantages et caractéristiques ressortiront mieux à la lecture de la description détaillée, faite à titre illustratif en référence aux figures suivantes parmi lesquelles :
- la figure 1 est une vue schématique en perspective éclatée montrant les différents éléments d'un accumulateur lithium-ion;
- la figure 2 est une vue de face montrant un accumulateur lithium-ion avec son emballage souple selon l'état de l'art,
- la figure 3 est une vue en perspective d'un accumulateur lithium-ion avec son emballage souple selon l'état de l'art;
- la figure 4 est une vue photographique en perspective montrant un accumulateur lithium-ion avec son emballage souple selon l'état de l'art, dans sa configuration incurvée maximale;
- la figure 5 est une vue photographique d'un exemple de languette métallique, telle qu'elle est destinée à être soudée à un collecteur de courant d'une électrode afin de former un pôle d'accumulateur lithium-ion selon l'état de l'art ;
- la figure 6 est une vue photographique de la connexion externe assurée par le substrat collecteur de courant de l'électrode positive qui est découpée selon une forme de languette afin de former un pôle d'accumulateur lithium-ion selon l'état de l'art;
- la figure 7 est une vue photographique d'une partie d'électrode positive selon l'invention comprenant un substrat à base de fibres de carbone supportant sur une de ses faces principales un motif de matériau d'insertion positif au lithium;
- la figure 8 est une vue photographique de la partie d'électrode positive de la figure 7, dont le substrat a été lié par couture avec une languette métallique destinée à former un pôle positif d'accumulateur lithium-ion ;
- la figure 9 est une vue photographique d'une partie d'électrode négative selon l'invention comprenant un substrat à base de fibres de carbone supportant sur une de ses faces principales un motif de matériau d'insertion négatif au lithium;
- la figure 10 est une vue photographique de la partie d'électrode négative de la figure 9, dont le substrat a été lié par couture avec une languette métallique destinée à former un pôle négatif d'accumulateur lithium-ion;
- la figure 11 symbolise les différents types de points de couture A à T que l'on peut envisager dans le cadre de la réalisation d'une jonction électro-conductrice entre une languette métallique et un substrat à base de fibres de carbone d'une électrode selon l'invention ;
- la figure 12 est une vue photographique d'un substrat à base de fibres de carbone formant avec la languette métallique une partie d'électrode selon l'invention, la figure illustrant la rupture du substrat après test d'arrachement qu'il a subi ;
- la figure 13 est une vue photographique montrant les différents constituants d'un accumulateur Li-ion selon l'invention, dont une électrode positive et une électrode négative selon l'invention ;
- la figure 14 est une vue photographique montrant l'extérieur de l'accumulateur selon la figure 13 une fois fini ;
- la figure 15 est une vue schématique d'une batterie comprenant trois accumulateurs selon la figure 14, reliés entre eux électriquement en série ;
- la figure 16 est une vue schématique d'une batterie comprenant trois accumulateurs selon la figure 14, reliés entre eux électriquement en parallèle.

Par souci de clarté, les mêmes références désignant les mêmes éléments d'un accumulateur selon l'état de l'art et d'un accumulateur selon l'invention sont utilisées pour toutes les figures 1 à 16.

On précise que les différents éléments selon l'invention sont représentés uniquement par souci de clarté et qu'ils ne sont pas à l'échelle.

Les figures 1 à 6 ont déjà été commentées en préambule. Elles ne seront donc pas détaillées ci-après.

L'invention est décrite ci-après en référence à un exemple de réalisation d'une électrode positive 2 selon l'invention et d'une électrode négative 3 selon l'invention.

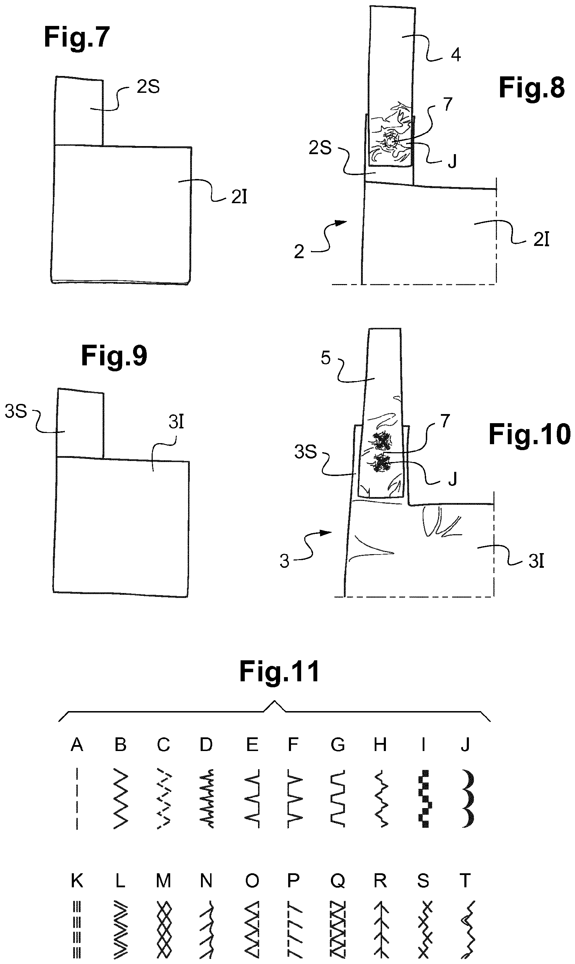

L'électrode positive 2 comprend tout d'abord un substrat à base de fibres de carbone 2S formant un collecteur de courant et supportant, sur une de ses faces principales, un motif continu de matériau actif d'insertion positif d'ion métal 2I (figure 7).

L'électrode négative 3 comprend elle aussi un substrat à base de fibres de carbone 3S formant un collecteur de courant et supportant, sur une de ses faces principales, un motif continu de matériau actif d'insertion négatif d'ion métal 3I (figure 9).

A titre d'exemple, les fibres de carbone à partir desquelles un substrat 2S ou 3S est réalisé peuvent avoir un diamètre d'environ 7 µm et une densité de 2. Un substrat 2S ou 3S à base de ces fibres de carbone peut ainsi présenter une épaisseur de 150 µm, une masse volumique de 628 mg/cm³ et une porosité de 69%.

Pour chacune de ces électrodes 2, 3 on obtient le motif d'électrode en réalisant les quatre étapes principales 1/ à 4/ suivantes.
Etape 1/: la préparation de l'encre d'électrode par le mélange des constituants à savoir le matériau actif, le liant polymère et le conducteur électronique. Le liant polymère, du PVdF ou un polymère soluble dans l'eau, a pour fonction d'apporter les propriétés mécaniques des électrodes tout en assurant un bon contact entre l'électrolyte et les grains du matériau. Le conducteur électronique, souvent du noir de carbone, améliore quant à lui la conductivité électronique des électrodes.
Etape 2/ : La mise en œuvre de l'électrode est réalisée par enduction. L'encre obtenue selon l'étape 1/ est coulée sur le substrat collecteur de courant à base de fibres de carbone, ce qui forme ainsi une bande d'électrode en continu. On peut aussi réaliser une impression de l'encre pour déposer sous forme de motifs sur le substrat à base de fibres de carbone. Le motif peut être de forme géométrique simple comme un carré, rectangle, rond mais peut être également plus complexe (calligraphie...)
Etape 3/ : une fois l'encre déposée sur le substrat à base de fibres de carbone, on procède à son séchage. Le solvant est alors évaporé par passage de l'électrode dans un four en continu ou en statique dans une étuve ventilée.
Etape 4/ : Les électrodes sont ensuite calandrées puis découpées selon le motif continu visé par l'application.

Dans l'exemple illustré, l'électrode positive 2 comprend en tant que matériau actif LiNiCoAlO₂, désigné par NCA (figure 7) et l'électrode négative 3 est à base de graphite (figure 9).

On procède ensuite à la réalisation de jonctions d'une languette métallique 4, 5 avec le substrat à base de fibres de carbone 2S, 3S respectivement de l'électrode positive 2 et de l'électrode négative 3.

Dans l'exemple illustré, pour réaliser ces jonctions carbone-métal, on utilise une languette d'aluminium 4, d'épaisseur 20µm, pour l'électrode positive NCA 2 et une languette de cuivre 5, d'épaisseur 10µm, pour l'électrode négative de graphite 3.

Ces languettes métalliques 4, 5 ont été fixées sur le substrat collecteur à base de fibres de carbone 2S, 3S par l'intermédiaire de points de couture réalisés manuellement à l'aide d'une aiguille et d'un fil de carbone 7, de diamètre 1mm. La couture peut utiliser les techniques classiques d'assemblage par machine à coudre de fils métalliques. En ce qui concerne les nœuds de finition de la couture, une fois la jonction languette/feutre en C réalisée, on peut mettre en œuvre une technique classique d'arrêt en couture, par exemple un passage en marche arrière quasi au même endroit.

Les jonctions carbone-métal J obtenues par couture du fil 7 sont montrées respectivement en :
- figure 8, pour l'électrode positive NCA 2 finie avec sa languette en aluminium 4;
- figure 10, pour l'électrode négative de graphite 3 finie avec sa languette en cuivre 5.

Pour réaliser les jonctions J avec un ou plusieurs fils 7 en carbone ou en métal, on peut envisager de faire à l'échelle industrielle, les points de couture avec des machines à coudre. Les motifs des points peuvent être diverses et variés, comme par exemple point droit, point zig-zag...

On a représenté en figure 11, différents motifs A à T de motifs de points de couture qui peuvent être envisagés.

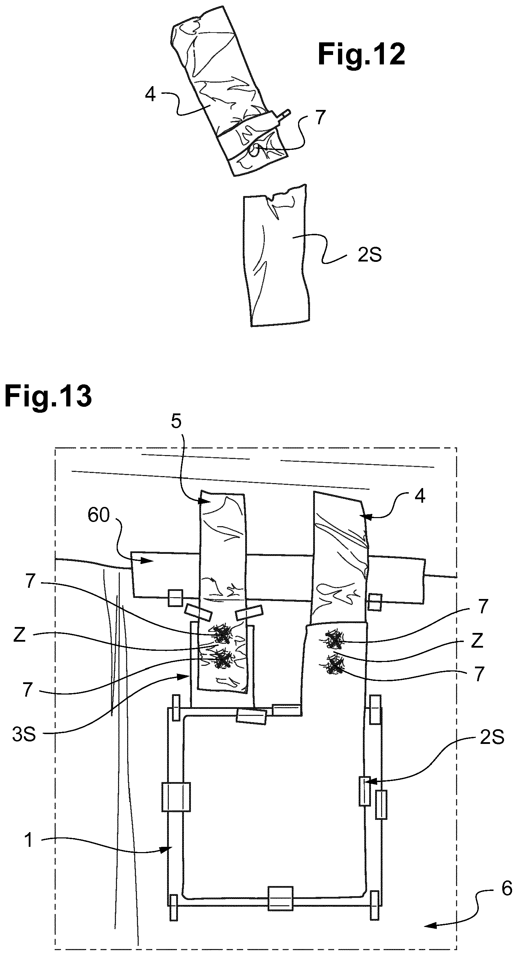

Afin de vérifier la résistance mécanique de ces points de couture, les inventeurs ont procédé à un test d'arrachement manuel. Le résultat de ce test pour une jonction aluminium-carbone d'une électrode positive 2 est montré en figure 12. Ce résultat est satisfaisant car comme cela ressort de cette figure 12, c'est le substrat collecteur à base de fibres de carbone 2S qui se déchire et non le point de couture 7.Une fois les électrodes positive NCA 2 et négative de graphite 3 selon l'invention finies avec leurs jonctions J avec languettes métalliques 4, 5 on procède à la réalisation de l'accumulateur A comme usuellement par empilement.

Ainsi, un film 1 de séparateur isolant électriquement, de type microporeux polymère, est agencé en contact avec chacun des motifs d'électrode 2I, 3I supportés respectivement par le substrat à base de fibres de carbone 2S et le substrat à base de fibres de carbone 3S.

Un ruban d'étanchéité 60 à base de polymère thermo-fusible est alors placé de part et d'autre des languettes métalliques d'aluminium 4 et de cuivre 5.

Un emballage souple 6, étanche à l'électrolyte et à l'air, est agencé pour contenir les électrodes positive 2 et négative 3 et le film séparateur microporeux 1, avec étanchéité tout en étant traversé par les languettes 4, 5 formant les pôles de l'accumulateur.

L'assemblage de ces différents éléments est montré en figure 13.

Dans cet exemple illustré, l'emballage souple 6 est constitué d'un film multicouches aluminisé à l'extérieur.

On procède ensuite à la fermeture de l'emballage souple 6.

Trois côtés de l'emballage 6 sont ainsi scellés thermiquement et le quatrième côté est maintenu ouvert pour pouvoir activer l'accumulateur qui consiste à remplir l'intérieur du récipient d'emballage ainsi formé en électrolyte. Après l'activation de l'accumulateur, ce quatrième côté est également scellé thermiquement.

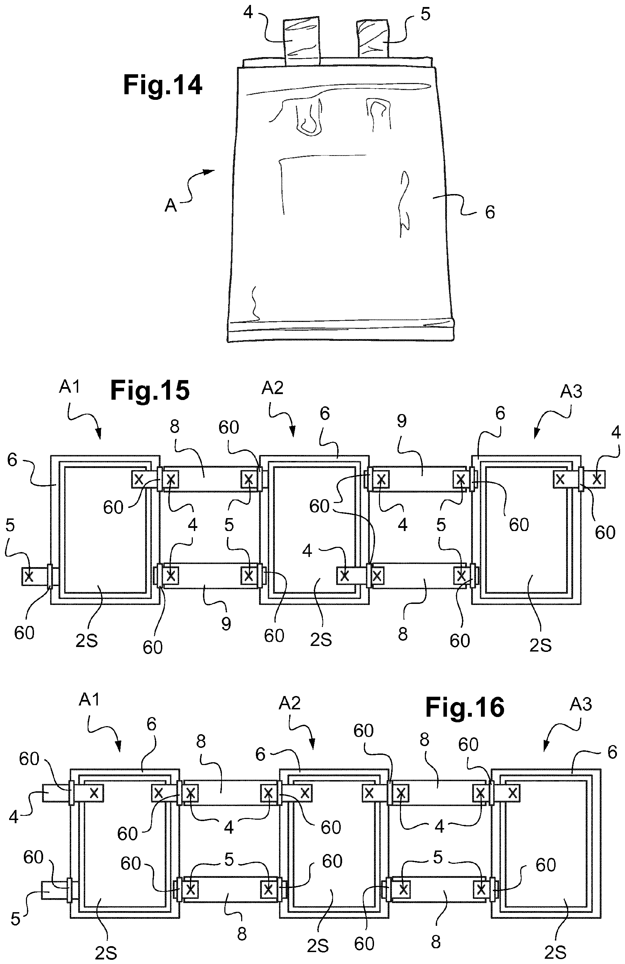

L'accumulateur selon l'invention A ainsi préparé et finalisé est montré en figure 14.

En fonction de l'application et/ou de la tension finale souhaitée, on peut assembler en série ou en parallèle électrique, une pluralité d'accumulateurs selon l'invention entre eux afin de constituer une batterie finale.

On a représenté en figure 15, un exemple d'un assemblage en série de trois accumulateurs A1, A2, A3 identiques obtenus comme selon l'exemple précédemment décrit.

Comme cela ressort de cette figure 15, la batterie finale comprend deux pôles de sortie ou connexions aux extrémités, l'une 5 reliée à l'électrode négative 3 sur l'un des accumulateurs d'extrémité A1 et l'autre 4 reliée à l'électrode positive 2 sur l'autre des accumulateurs d'extrémité A3.

Les accumulateurs A1, A2, A3 sont reliés électriquement entre eux par les languettes métalliques/pôles 4, 5 qui sont cousues ou tissées sur les substrats en non tissé de carbone 2S, 3S ainsi que par des bandes de liaison électrique 8 également à base de fibres de carbone. L'une des extrémités d'une bande 8 est reliée à une languette métallique positive 4 et l'autre des extrémités de la bande 8 est reliée à une languette métallique négative 5. Ces liaisons sont réalisées également par des jonctions carbone-métal J par couture d'un fil 7 en carbone ou métal comme explicité ci-avant.

Afin de conserver une bonne articulation et renforcer mécaniquement la structure, on ajoute avantageusement une bande de liaison mécanique 9 entre deux accumulateurs A1-A2, A2-A3 adjacents.

Chaque bande de liaison mécanique 9 est à base de fibres de carbone dont chacune des extrémités est liée à une languette métallique 4, 5 également par une jonction métal-carbone J. Chaque bande 9 est agencée parallèlement à une bande de liaison électrique 8 reliant les deux pôles positif 4 et négatif 5.

Les points de fixation d'une bande de liaison mécanique 9 à l'emballage souple 6 de deux accumulateurs adjacents A1-A2, A2-A3 sont chacun constitués par un ruban d'étanchéité 60 supporté de part et d'autre d'une languette métallique 4, 5 comme précédemment.

On a représenté en figure 16, un exemple d'un assemblage en parallèle électrique de trois accumulateurs A1, A2, A3 identiques obtenus comme selon l'exemple précédemment décrit.

Comme cela ressort de cette figure 16, la batterie finale comprend deux pôles de sortie ou connexions aux extrémités, l'une 5 reliée à l'électrode négative 3 sur l'un des accumulateurs d'extrémité A1 et l'autre 4 reliée à l'électrode positive 2 sur le même accumulateur d'extrémité A1.

Ici, deux accumulateurs adjacents A1-A2, A2-A3 sont reliés électriquement par deux bandes de liaison électrique 8 à base de fibres de carbone.

Une de ces deux bandes 8 relie entre elles les électrodes positives 2 des deux accumulateurs A1-A2, A2-A3 et l'autre 8 relie entre elles les électrodes négatives 3 des deux accumulateurs A1-A2, A2-A3.

D'autres variantes et avantages de l'invention peuvent être réalisés sans pour autant sortir du cadre de l'invention.

L'invention n'est pas limitée aux exemples qui viennent d'être décrits ; on peut notamment combiner entre elles des caractéristiques des exemples illustrés au sein de variantes non illustrées.

L'expression « comportant un » ou « comprenant un » doit être comprise comme étant synonyme de « comportant au moins un », sauf si le contraire est spécifié.

## Revendications

1. Système électrochimique étanche, comprenant :
- un emballage;
- un substrat (2S, 3S) électriquement conducteur et poreux, formant un collecteur de courant et supportant, sur au moins une de ses faces principales, au moins un motif continu de matériau actif d'une électrode (2I, 3I); le substrat poreux étant de préférence à base de fibres de carbone ;
- au moins une languette (4, 5) électriquement conductrice et dense, liée au substrat selon au moins une jonction électriquement conductrice obtenue par couture au moyen d'au moins un fil électriquement conducteur, la languette supportant sur chacune de ses faces principales au moins un ruban d'étanchéité scellé à l'emballage pour garantir la fermeture étanche de celui-ci.

2. Système selon la revendication 1, le fil étant métallique, de préférence en cuivre ou en aluminium, ou en carbone ou uniquement métallisé, de préférence en nylon métallisé.

3. Système selon l'une des revendications précédentes, l'épaisseur de la languette étant comprise entre 10 et 200µm.

4. Système selon l'une des revendications précédentes, le nombre de points de couture étant au moins égal à 16 points de couture/cm².

5. Système selon l'une des revendications précédentes, la languette étant métallique, de préférence en aluminium, en cuivre ou en nickel.

6. Système selon l'une des revendications précédentes, le fil métallique étant en cuivre ou en aluminium.

7. Système selon l'une des revendications précédentes, le diamètre du fil étant compris entre 0,3 et 2 mm pour un fil de carbone, entre 0,1 et 0,5 mm pour un fil de cuivre et entre 0,8 et 2 mm pour un fil d'aluminium.

8. Système selon l'une des revendications précédentes, la largeur d'un ruban d'étanchéité étant comprise entre 0,5 et 1 cm, l'épaisseur d'un ruban d'étanchéité étant de préférence comprise entre 0,05 et 0,2 mm.

9. Système selon l'une des revendications précédentes, comprenant au moins deux languettes assemblées au substrat poreux, au moins une des deux languettes étant destinée à servir de liaison électrique avec un autre système électrochimique auquel le système intégrant l'électrode est relié.

10. Accumulateur électrochimique (A) métal-ion constitué à partir d'un système électrochimique étanche selon l'une des revendications précédentes, comprenant un empilement des éléments suivants:
- au moins une électrode négative;
- au moins une électrode positive;
- au moins un film de séparateur isolant électriquement intégrant un électrolyte, agencé en contact avec le motif d'électrode négative et le motif d'électrode positive;
- un emballage (6) agencé pour contenir les électrodes négative et positive, et le film de séparateur, avec étanchéité tout en étant traversé par un premier et un deuxième pôles de l'accumulateur constitués chacun par la languette conductrice cousue au substrat poreux de l'électrode négative et de l'électrode positive, les rubans d'étanchéité (60) des électrodes négative et positive étant scellés thermiquement à l'emballage (6).

11. Batterie comprenant une pluralité d'accumulateurs selon la revendication 10, deux accumulateurs adjacents étant reliés entre eux électriquement par au moins une bande de liaison électrique réalisée en substrat conducteur poreux, dont une extrémité est liée à une languette dense d'une électrode négative ou positive d'un des deux accumulateurs et l'autre extrémité est liée à une languette dense d'une électrode respectivement négative ou positive de l'autre des deux accumulateurs, la liaison entre la bande et chacune des languettes étant réalisée selon au moins une jonction électriquement conductrice obtenue par couture au moyen d'au moins un fil métallique et/ou en carbone.

12. Batterie selon la revendication 11, deux accumulateurs adjacents étant reliés entre eux en parallèle électrique par deux bandes de liaison électrique dont une relie entre elles les électrodes positives des deux accumulateurs et l'autre relie entre elles les électrodes négatives des deux accumulateurs.

13. Batterie selon la revendication 11, deux accumulateurs adjacents étant reliés entre eux en série électrique par une seule bande de liaison électrique.

14. Batterie selon la revendication 13, comprenant en outre au moins une bande de liaison mécanique en substrat conducteur poreux, dont chacune des extrémités est liée à une languette dense de liaison mécanique qui n'est pas liée à une électrode négative ou positive des accumulateurs, la liaison entre la bande de liaison mécanique et chacune des languettes de liaison mécanique étant réalisée selon au moins une jonction obtenue par couture au moyen d'au moins un fil.

15. Procédé de réalisation d'un système électrochimique étanche comprenant les étapes suivantes :
a/ obtention d'un motif continu de matériau actif d'électrode sur un substrat électriquement conducteur et poreux formant un collecteur de courant ; le substrat poreux étant de préférence à base de fibres de carbone ;
b/ réalisation d'au moins une jonction électriquement conductrice entre au moins une languette électriquement conductrice et dense et le substrat, par couture au moyen d'au moins un fil électriquement conducteur,
c/ réalisation sur chacune des faces principales de la languette, d'au moins un ruban d'étanchéité destiné à la fermeture étanche de l'emballage,
d/ scellement entre ruban d'étanchéité et emballage.

## Patentansprüche

1. Dichtes elektrochemisches System, welches umfasst;
- eine Hülle;
- ein elektrisch leitendes und poröses Substrat (2S, 3S), das einen Stromkollektor bildet und auf wenigstens einer seiner Hauptflächen wenigstens eine durchgehende Struktur von aktivem Material einer Elektrode (2I, 3I) trägt; wobei das poröse Substrat vorzugsweise auf Carbonfasern basiert;
- wenigstens eine elektrisch leitende und kompakte Zunge (4, 5), die mit dem Substrat über wenigstens eine elektrisch leitende Verbindungsstelle verbunden ist, die durch Nähen mittels wenigstens eines elektrisch leitenden Drahtes erhalten wird, wobei die Zunge auf jeder ihrer Hauptflächen wenigstens ein Dichtungsband trägt, das mit der Hülle versiegelt ist, um den dichten Verschluss derselben zu garantieren.

2. System nach Anspruch 1, wobei der Draht metallisch ist, vorzugsweise aus Kupfer oder aus Aluminium, oder aus Kohlenstoff besteht oder nur metallisiert ist, vorzugsweise aus metallisiertem Nylon.

3. System nach einem der vorhergehenden Ansprüche, wobei die Dicke der Zunge zwischen 10 und 200 µm liegt.

4. System nach einem der vorhergehenden Ansprüche, wobei die Anzahl der Nähstiche mindestens 16 Nähstiche/cm² beträgt.

5. System nach einem der vorhergehenden Ansprüche, wobei die Zunge metallisch ist, vorzugsweise aus Aluminium, aus Kupfer oder aus Nickel.

6. System nach einem der vorhergehenden Ansprüche, wobei der Metalldraht aus Kupfer oder aus Aluminium besteht.

7. System nach einem der vorhergehenden Ansprüche, wobei der Durchmesser des Drahtes zwischen 0,3 und 2 mm für einen Kohlenstoffdraht, zwischen 0,1 und 0,5 mm für einen Kupferdraht und zwischen 0,8 und 2 mm für einen Aluminiumdraht liegt.

8. System nach einem der vorhergehenden Ansprüche, wobei die Breite eines Dichtungsbandes zwischen 0,5 und 1 cm liegt, wobei die Dicke eines Dichtungsbandes vorzugsweise zwischen 0,05 und 0,2 mm liegt.

9. System nach einem der vorhergehenden Ansprüche, welches wenigstens zwei Zungen umfasst, die mit dem porösen Substrat zusammengebaut sind, wobei wenigstens eine der zwei Zungen dazu bestimmt ist, als elektrische Verbindung mit einem anderen elektrochemischen System zu dienen, mit welchem das System, in das die Elektrode integriert ist, verbunden ist.

10. Elektrochemischer Metallionen-Akkumulator (A), welcher aus einem dichten elektrochemischen System nach einem der vorhergehenden Ansprüche gebildet ist und einen Stapel der folgenden Elemente umfasst:
- wenigstens eine negative Elektrode;
- wenigstens eine positive Elektrode;
- wenigstens einen elektrisch isolierenden Separatorfilm, in den ein Elektrolyt integriert ist und der in Kontakt mit der negativen Elektrodenstruktur und der positiven Elektrodenstruktur angeordnet ist;
- eine Hülle (6), die dafür ausgelegt ist, die negative und die positive Elektrode und den Separatorfilm zu enthalten, mit Abdichtung, wobei sie zugleich von einem ersten und einem zweiten Pol des Akkumulators durchquert wird, die jeweils aus der leitenden Zunge bestehen, die an das poröse Substrat der negativen Elektrode bzw. der positiven Elektrode genäht ist, wobei die Dichtungsbänder (60) der negativen und der positiven Elektrode mit der Hülle (6) heißversiegelt sind.

11. Batterie, welche mehrere Akkumulatoren nach Anspruch 10 umfasst, wobei zwei benachbarte Akkumulatoren durch wenigstens einen aus porösem leitendem Substrat hergestellten Streifen zur elektrischen Verbindung elektrisch miteinander verbunden sind, von dem ein Ende mit einer kompakten Zunge einer negativen oder positiven Elektrode eines der Akkumulatoren verbunden ist und das andere Ende mit einer kompakten Zunge einer negativen bzw. positiven Elektrode des anderen der zwei Akkumulatoren verbunden ist, wobei die Verbindung zwischen dem Streifen und jeder der Zungen über wenigstens eine elektrisch leitende Verbindungsstelle hergestellt ist, die durch Nähen mittels wenigstens eines Metall- und/oder Kohlenstoffdrahtes erhalten wird.

12. Batterie nach Anspruch 11, wobei zwei benachbarte Akkumulatoren durch zwei Streifen zur elektrischen Verbindung elektrisch zueinander parallelgeschaltet sind, von denen einer die positiven Elektroden der zwei Akkumulatoren miteinander verbindet und der andere die negativen Elektroden der zwei Akkumulatoren miteinander verbindet.

13. Batterie nach Anspruch 11, wobei zwei benachbarte Akkumulatoren durch nur einen Streifen zur elektrischen Verbindung elektrisch zueinander in Reihe geschaltet sind.

14. Batterie nach Anspruch 13, welche außerdem wenigstens einen Streifen zur mechanischen Verbindung aus porösem leitendem Substrat umfasst, von dem jedes der Enden mit einer kompakten Zunge zur mechanischen Verbindung verbunden ist, welche nicht mit einer negativen oder positiven Elektrode der Akkumulatoren verbunden ist, wobei die Verbindung zwischen dem Streifen zur mechanischen Verbindung und jeder der Zungen zur mechanischen Verbindung über wenigstens eine Verbindungsstelle hergestellt ist, die durch Nähen mittels wenigstens eines Drahtes erhalten wird.

15. Verfahren zur Herstellung eines dichten elektrochemischen Systems, welches die folgenden Schritte umfasst:
a/ Erzielung einer durchgehenden Struktur von aktivem Elektrodenmaterial auf einem elektrisch leitenden und porösen Substrat, das einen Stromkollektor bildet; wobei das poröse Substrat vorzugsweise auf Carbonfasern basiert;
b/ Herstellung wenigstens einer elektrisch leitenden Verbindungsstelle zwischen wenigstens einer elektrisch leitenden und kompakten Zunge und dem Substrat durch Nähen mittels wenigstens eines elektrisch leitenden Drahtes;
c/ Herstellung, auf jeder der Hauptflächen der Zunge, wenigstens eines Dichtungsbandes, das für den dichten Verschluss der Hülle bestimmt ist;
d/ Versiegelung zwischen Dichtungsband und Hülle.

## Claims

1. Leaktight electrochemical system, comprising:
- a packaging;
- a porous electrically conductive substrate (2S, 3S), forming a current collector and supporting, on at least one of its main faces, at least one continuous pattern of active material of an electrode (21, 31); the porous substrate being preferably based on carbon fibers;
- at least one dense electrically conductive tab (4, 5), connected to the substrate at at least one electrically conductive junction obtained by sewing using at least one electrically conductive thread, the tab supporting, on each of its main faces, at least one sealing tape sealed to the packaging to ensure the leaktight closure thereof.

2. System according to Claim 1, the thread being metallic, preferably made of copper or aluminum, or of carbon or only metalized, preferably made of metalized nylon.

3. System according to one of the preceding claims, the thickness of the tab being between 10 and 200 µm.

4. System according to one of the preceding claims, the number of stitches being at least equal to 16 stitches/cm².

5. System according to one of the preceding claims, the tab being metallic, preferably made of aluminum, copper or nickel.

6. System according to one of the preceding claims, the metal thread being made of copper or aluminum.

7. System according to one of the preceding claims, the diameter of the thread being between 0.3 and 2 mm for a carbon thread, between 0.1 and 0.5 mm for a copper thread and between 0.8 and 2 mm for an aluminum thread.

8. System according to one of the preceding claims, the width of a sealing tape being between 0.5 and 1 cm, the thickness of a sealing tape preferably being between 0.05 and 0.2 mm.

9. System according to one of the preceding claims, comprising at least two tabs assembled to the porous substrate, at least one of the two tabs being intended to serve as electrical connection with another electrochemical system to which the system incorporating the electrode is connected.

10. Metal-ion electrochemical accumulator (A) constituted from a leaktight electrochemical system according to one of the preceding claims, comprising a stack of the following elements:
- at least one negative electrode;
- at least one positive electrode;
- at least one electrically insulating separating film incorporating an electrolyte, arranged in contact with the negative electrode pattern and the positive electrode pattern;
- a packaging (6) arranged to contain the negative and positive electrodes, and the separating film, with leaktightness while at the same time being traversed by a first and a second terminal of the accumulator, each constituted by the conductive tab sewn to the porous substrate of the negative electrode and of the positive electrode, the sealing tapes (60) of the negative and positive electrodes being heat-sealed to the packaging (6).

11. Battery comprising a plurality of accumulators according to Claim 10, two adjacent accumulators being connected together electrically via at least one electrical connecting strip made of porous conductive substrate, one end of which is connected to a dense tab of a negative or positive electrode of one of the two accumulators and the other end is connected to a dense tab of a negative or positive electrode, respectively, of the other of the two accumulators, the connection between the strip and each of the tabs being made at at least one electrically conductive junction obtained by sewing using at least one metal and/or carbon thread.

12. Battery according to Claim 11, two adjacent accumulators being connected together electrically in parallel via two electrical connecting strips, one of which connects together the positive electrodes of the two accumulators and the other connects together the negative electrodes of the two accumulators.

13. Battery according to Claim 11, two adjacent accumulators being connected together electrically in series via a single electrical connecting strip.

14. Battery according to Claim 13, also comprising at least one mechanical connecting strip made of porous conductive substrate, each of the ends of which is connected to a dense mechanical connection tab which is not connected to a negative or positive electrode of the accumulators, the connection between the mechanical connecting strip and each of the mechanical connection tabs being made at at least one junction obtained by sewing using at least one thread.

15. Process for preparing a leaktight electrochemical system comprising the following steps:
a/ producing a continuous pattern of electrode active material on a porous electrically conductive substrate forming a current collector; the porous substrate being preferably based on carbon fibers;
b/ making at least one electrically conductive junction between at least one dense electrically conductive tab and the substrate, by sewing using at least one electrically conductive thread,
c/ producing, on each of the main faces of the tab, at least one sealing tape intended for leaktight closure of the packaging,
d/ sealing between the sealing tape and the packaging.
